# EUROPÄISCHE PATENTSCHRIFT

(11) **EP 1 605 421 B1**
(45) Veröffentlichungstag und Bekanntmachung des Hinweises auf die Patenterteilung: **25.05.2011**
(21) Anmeldenummer: 05012089.8
(22) Anmeldetag: 04.06.2005
(51) Int. Cl.: G09B 9/02, G09B 9/32

(54) **Simulator**
Simulator
Simulateur

(30) Priorität: 11.06.2004 DE 102004028261
(43) Veröffentlichungstag der Anmeldung: 14.12.2005
(73) Patentinhaber: KUKA Laboratories GmbH, 86165 Augsburg (DE)
(72) Erfinder: Heinrich, Harald, 84072 Osseltshausen (DE)
(74) Vertreter: Lempert, Jost

(56) Entgegenhaltungen:
- EP-A2- 0 997 176
- WO-A-01/95989
- WO-A-94/24651
- DE-U1- 29 512 759
- JP-A- 5 158 399
- US-A- 5 486 141
- US-A1- 2004 029 094
- KUKA: "Robocoaster"[Online] 7. Februar 2003 (2003-02-07), Seite 1-4,39, XP002372485 Gefunden im Internet: URL:http://www.kuka.com/NR/rdonlyres/6AEE2 444-CD93-46ED-AEB8-03551A8CCDDC/0/spez_rob ocoaster.pdf> [gefunden am 2006-03-16]

## Beschreibung

Die Erfindung betrifft einen Simulator mit einem Manipulator mit mehreren Drehachsen nach dem Oberbegriff des Anspruchs 1.

Ein solcher Simulator kann als Simulator jeglicher Art eingesetzt werden, als Flugsimulator, als Simulator zur Simulation eines Kraftfahrzeugs etc.

Bekannte Simulatoren weisen neben einer Kinematik zur Bewegung der Sitzeinheiten einen Bildwiedergabeschirm auf, der in der Regel ein Monitor ist sowie ein elektro-akustisches Wiedergabesystem.

Die WO 01/95989 zeigt ein Fahrgerät bei dem ein Gelenkroboter sicherheitstechnisch zum Transport von Personen ausgebildet ist und mit einer am Handflansch des Roboters angeordneten Passagierstation mit einem oder mehreren Sitzen ausgestattet ist. Die Passagierstation ist als Kabine ausgebildet und, weist eine Einrichtung zur audio-visuellen Interaktion mit Lautsprechern und Anzeigeeinrichtungen auf. Die DE 29512759 U1 betrifft eine Sitzanordnung für Belustigungsvorrichtungen. Hierbei ist ein Sitz auf mehreren Huberzeugern angeordnet und durch diese bewegbar. Im oberen Bereich der Sitzlehne ist eine nach unten offene Haube drehbar gelagert und ist über den Kopf einer Person verschwenkbar. Die Haube weist einen Monitor zur visuellen Interaktion auf. Die Sitzanordnung weist einen fernbedienbaren Antrieb zu Höhen-/Kippverstellung der Sitze mit zylinderförmigen Huberzeuger.

In der US 5486141 A ist eine Vorrichtung zur Vergnügung beschrieben, welche einen Sitz für eine Person, einen Monitor zur Darstellung eines Videosignals, Bewegungselemente zur Erzeugung einer Bewegung des Sitzes und eine Steuerungseinrichtung zur Steuerung und Regelung der Sitzbewegung aufweist. Der Monitor und die Bewegungselemente sind innerhalb der Vergnügungseinrichtung angeordnet. Die Steuerungseinrichtung ist separat in einer Kontrolleinheit installiert.

Die Sitzeinheit für die den Manipulator nutzenden Personen ist in der Regel als geschlossene Kabine mit integriertem Bildwiedergabeschirm ausgebildet. Die Platzverhältnisse sind daher meist beengt und das Ein- und Aussteigen ist mühsam. Die geschlossenen räumlichen Verhältnisse bedingen ein aufwändiges Be- und Entlüftungssystem und engen den Fahrgast ein.

Der Erfindung liegt daher die Aufgabe zugrunde, einen Simulator auf der Basis eines Mehrachs-Manipulators zu schaffen, der unter Vermeidung der vorgenannten Nachteile insbesondere ein leichtes Ein- und Aussteigen ermöglicht. Erfindungsgemäß wird die genannte Aufgabe durch einen Simulator der eingangs genannten Art mit dem Kennzeichen des Anspruchs 1 gelöst.

Durch die erfindungsgemäße Lösung wird ein Simulator geschaffen, der bei Bewegen des Projektionsschirms in seine Aus- und Ausstiegsposition ein leichtes Ein- und Aussteigen ermöglicht, aber in der Betriebs- oder Wiedergabe-Stellung eine optimale Simulation ermöglicht.

In bevorzugter Ausgestaltung ist der Projektionsschirm als Projektionsschirm ausgebildet, wobei in diesem Fall ein Videoprojektor in Form eines Beamers oder eines Laserprojektors vorgesehen ist, der die Szenerie auf den Projektionsschirm projiziert. Der Projektionsschirm kann eben oder (teil-) sphärisch ausgebildet sein. Der Projektionsschirm kann aus faltbarem Stoff oder aus faserverstärktem Kunststoff bestehen.

Der Schirm ist von der Projektionseinheit mechanisch entkoppelt, d.h. die Projektionseinheit kann getrennt vom Schirm bewegt werden. Dadurch ist eine Schwingungsentkoppelung gegeben und die Position von Projektionseinheit zu Schirm kann optimal eingestellt werden. Schwingungen des Schirmes werden somit nicht auf den Projektor übertragen. Die Anbindung des Projektors kann steifer gestaltet werden. Ein leichtes Schwingen des Schirmes wird beim Betrachter nicht wahrgenommen, während eine Bewegung des Projektors und damit des Bildes als störend empfunden wird.

Der Projektionsschirm kann in einer bevorzugten Ausgestaltung faltbar ausgebildet sein, beispielsweise in Form eines zusammenfaltbaren Schirms (Knirps-Prinzip) oder aber mit ihn aufspannenden gebogenen Lamellen, die um einen Schwenkpunkt von einer Schließ- in eine Öffnungsstellung und vice versa schwenkbar sind.

In alternativer Ausgestaltung kann vorgesehen sein, dass der Projektionsschirm verschwenkbar angeordnet ist, wobei er an der Sitzeinheit oder aber direkt am Handflansch des Manipulators verschwenkbar angelenkt sein kann. Es können ein oder mehrere Schwenkachsen vorgesehen sein. Das Verschwenken kann um eine Achse im Wesentlichen senkrecht zur Erstreckungsrichtung der Rückenlehnen der Sitzeineinheit oder aber in deren Erstreckung oder aber um mehrere Achsen erfolgen. Auch Zwischenpositionen sind möglich, so dass ein schräges Fortschwenken des Projektionsschirms gegeben ist.

In bevorzugter Ausgestaltung ist weiterhin vorgesehen, dass der Projektionsschirm in einer Wiedergabe-Stellung in einem Gegenlager gehalten ist, wobei er vorzugsweise durch eine Nut- oder Bolzenverbindung gebildet ist. Weiter kann der Projektionsschirm in der Wiedergabe-Stellung verriegelbar sein, wobei dies durch eine Querverriegelung geschehen kann, bei der der Verriegelungsmechanismus ein Aufnahmeteil und ein Einsteckteil aufweist, die durch ein senkrecht durch beide hindurchführbaren Verriegelungsbolzen fest miteinander verbindbar sind. Alternativ kann ein Verriegelungsmechanismus mit einer Auflauffläche und einer Ausnehmung versehenen Verriegelungsstab und einem hakenförmigen Schwenkhebel vorgesehen sein, der zum Verriegelungsstab hin federbeaufschlagt vorgespannt ist. Alternativ können andere Verriegelungssysteme wie eine Sperrklinke, ein Excenterriegel oder eine Magnetverriegelung vorgesehen sein. Der Verriegelungsmechanismus kann ein Aufnahmeteil und einen mit einem Signalstift versehenen Verriegelungsstift aufweisen, wobei die Verriegelung durch einen Anpressdruck erzeugt wird, indem ein Schwenkantrieb für den Projektionsschirm ein Stillstandsmoment aufweist, das eine sichere Fixierung des Schirms, insbesondere in der eingeschwenkten, aber auch der freigebenden Position ermöglicht. Zur Unterstützung können die Antriebselemente eine Selbsthemmung aufweisen oder es kann eine Stillstandsbremse vorgesehen sein. Die Überwachung der Verriegelung kann durch einen sicheren Sensor erfolgen.

Das Verschwenken des Projektionsschirms kann von Hand oder aber durch einen Antrieb erfolgen, wie durch einen elektromotorischen Antrieb oder aber auch einen Hydraulik- oder Gaszylinderantrieb.

Gemäß einer weiteren bevorzugten Ausgestaltung ist ein der Sitzeinheit zugeordnetes Tonwiedergabesystem vorgesehen. Dieses kann ein Surround-Sound-System sein. Ein Verstärker, der über Lichtwellenleiter oder konventioneller Kabeltechnik mit digitalen oder analogen Daten versorgt wird, steuert die Lautsprecheranlage. Die Ansprechung der Lautsprecher kann über Haltesysteme optimal auf die Sitzplätze angepasst werden.

Ein Einstieg in die Sitzeinheit kann grundsätzlich von vorne oder von der Seite erfolgen, gegebenenfalls je nach Ausgestaltung der Eintrittsstelle und des Projektionsschirms.

Weitere Vorteile und Merkmale der Erfindung ergeben sich aus den Ansprüchen und aus der nachfolgenden Beschreibung, in der Ausführungsbeispiele der Erfindung unter Bezugnahme auf die Zeichnung im Einzelnen erläutert sind. Dabei zeigt:
- Fig. 1 u. 2: ein erstes Ausführungsbeispiel eines erfindungsgemäßen Simulators mit einem
- Fig. 3: zusammenfaltbaren Projektionsschirm; eine isolierte Darstellung der Sitzein- heit mit Projektionsschirmen der Fig. 1 und 2;
- Fig. 4 u. 5: eine weitere Sitzeinheit mit in Form eines zusammenklappbaren Schirms ausge- bildeten Projektionsschirm;
- Fig. 6: eine Sitzeinheit mit einem rückwärtig vorgesehenen Schirm zur Abdunkelung;
- Fig. 7 u. 8: einen erfindungsgemäßen Simulator mit Sitzeinheit und verschwenkbarem Schirm;
- Fig. 9 - 11: eine erste Ausgestaltungsform einer Verriegelungsanordnung für einen verschwenkbaren Schirm;
- Fig. 12: ein anderer Verriegelungsmechanismus;
- Fig. 13: ein weiterer Verriegelungsmechanismus;
- Fig. 14 u. 15: eine weitere Ausführungsform des er- findungsgemäßen Simulators in Ein- und Ausstiegsposition (Fig. 14) und Wie- dergabestellung (Fig. 15); und
- Fig. 16 - 19: eine weitere Ausführungsform einer er- findungsgemäßen Sitzeinheit mit einem Hebelgetriebe zum Verschwenken eines Wiedergabeschirms in geschlossener Stellung (Fig. 16, 17) und in geöffne- ter Stellung (Fig. 18, 19).
- Fig. 20 - 23: eine weitere erfindungsgemäße Ausges- taltung einer erfindungsgemäßen Sitz- einheit mit Projektionsschirm und Pro- jektor in perspektivischer Darstellung (Fig. 20 und 22) und Frontansicht (Fig. 21, 23) mit ausgeschwenktem Pro- jektor (Fig. 20, 21) und in Betriebs- stellung eingeschwenkten Projektor (Fig. 22, 23).

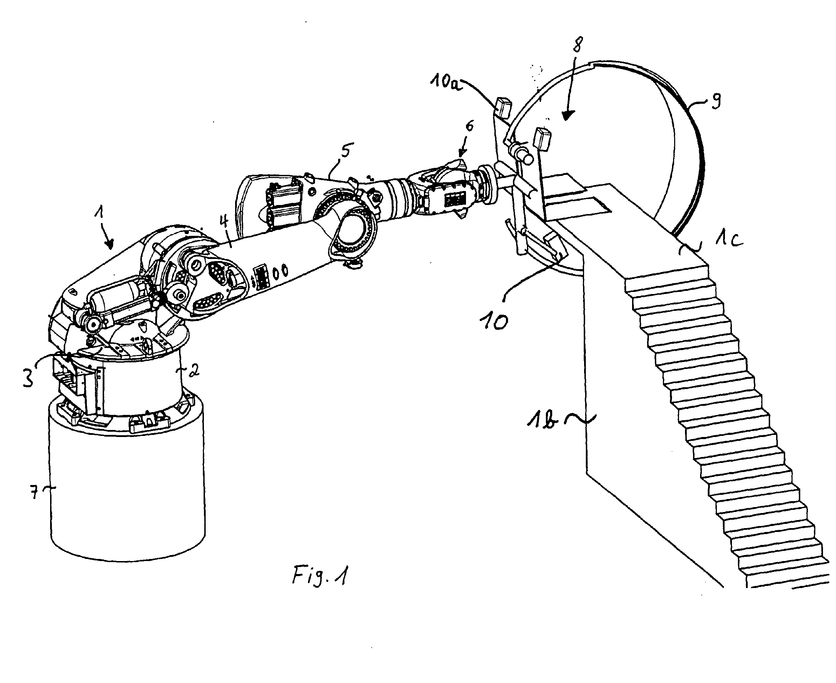

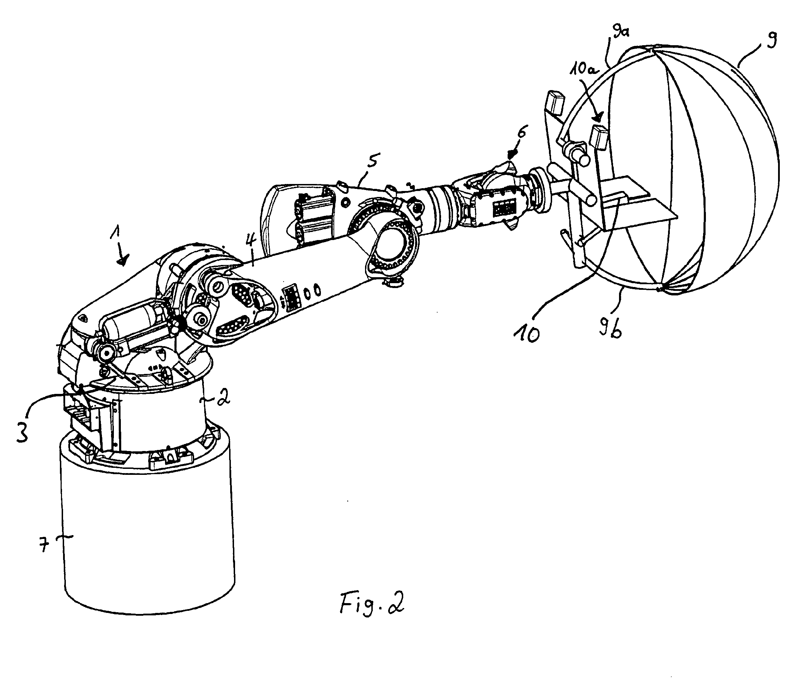

Die Fig. 1 und 2 zeigen ein erstes Ausführungsbeispiel eines erfindungsgemäßen Simulators 1 der einen Manipulator 1a mit sechs Drehachsen, der vertikalen A1-Achse, um die das Karussell 3 des Manipulators relativ zum Sockel 2 verdrehbar ist, den horizontalen A2- und A3-Achsen zwischen Karussell 3 und Schwinge 4 bzw. Schwinge 4 und Manipulatorarm 5 sowie den drei Handachsen A4, A5, A6 der Hand 6.

Der Sockel 2 des Manipulators 1 ist auf einer stabilen, ortsfesten Basis 7 aufgebaut.

Am Handflansch der Hand 6 des Manipulators 1a ist eine Sitzeinheit 8 mit zwei Sitzen befestigt. Der Zugang zu den Sitzen kann, wie in der Fig. 1 dargestellt, über eine Treppe 1b erfolgen, die vorzugsweise verfahrbar ausgebildet ist.

Im dargestellten Ausführungsbeispiel ist an der Sitzeinheit ein Bildwiedergabeschirm in Form eines Projektionsschirms 9 befestigt. Der Bildwiedergabeschirm kann auch direkt am Handflansch der Hand 6 des Manipulators 1a befestigt sein. Bei dem in Fig. 1 dargestellten Ausführungsbeispiel ist ein Projektor 10 vorgesehen, mittels dessen eine Szene auf dem Projektionsschirm 9 projiziert werden kann. Der Projektor 10 ist nach Fortbewegen der Sitzeinheit 8 von einer Einstiegsplattform 1c zwischen die Sitze der Sitzeinheit 8 in eine Projektionsstellung einschwenkbar. An der Sitzeinheit sind weiterhin Lautsprecher 10a angeordnet.

In der Darstellung der Fig. 1 ist der Projektionsschirm 9 in einem zusammengefalteten Zustand dargestellt, der einen Zutritt von Passagieren zu der Sitzeinheit 8 des Manipulators 1 erlaubt. Bei der Ausgestaltung der Fig. 2 ist der Projektionsschirm 9 aufgespannt, so dass von dem oberhalb des Rücklehnenbereichs der Sitzeinheit 8 angeordneten Projektor 10 ein Bild auf die Innenseite des Projektionsschirms 9 projiziert werden kann.

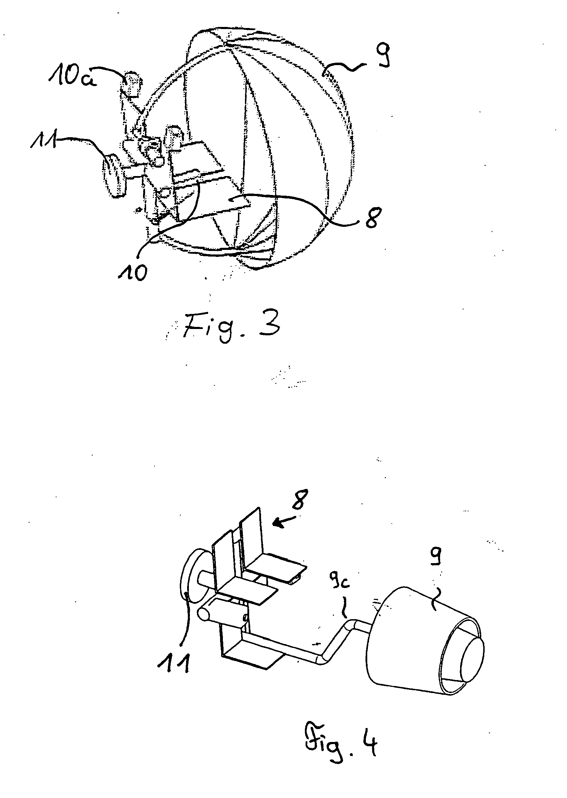

Der Projektionsschirm 9 wird durch zwei Bügel 9a, 9b an der Rückseite der Sitzeinheit 8 gehalten. Bei dieser Ausgestaltung ist vorzugsweise der Einstieg in die Sitzeinheit 8 von der Seite, über die Treppe 1b von einer Plattform 1c aus vorgesehen. In der Fig. 3 ist die Sitzeinheit 8 mit Projektionsschirm 9 noch einmal isoliert dargestellt. Es ist ein Flanschteil 11 erkennbar, mit dem sie am Handflansch der Hand 6 des Roboters befestigbar ist.

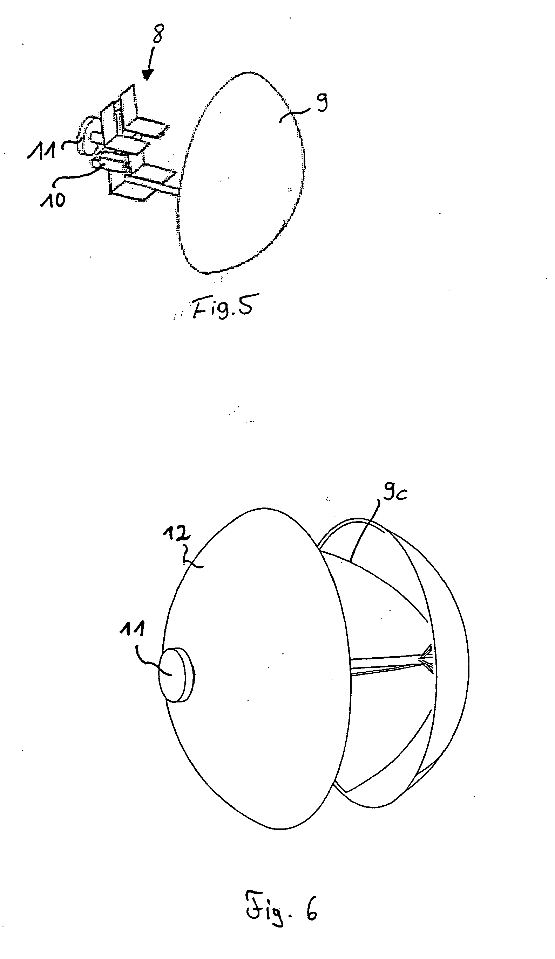

Die Fig. 4 und 5 zeigen eine weitere Sitzeinheit 8 mit Projektionsschirm 9 eines erfindungsgemäßen Manipulators. Diese Sitzeinheit weist insgesamt vier Sitze auf. Auch die Sitzeinheit der Fig. 1 bis 3 kann mit vier Sätzen ausgestattet sein. Der Projektionsschirm 9 der Fig. 4 und 5 ist in Form eines zusammenklappbaren Schirms ausgebildet, wobei die (nicht dargestellten, in der Fig. 5 auf der Innenseite angeordneten) den Schirm aufspannenden sich radial erstreckenden Streben 9c abklappbar sind und an der zentralen Tragstange 9d über Streben und einem Parallelogrammgestänge aufspannbar sind.

In den Fig. 4 und 5 ist ein Projektor 10 seitlich der Sitzeinheit angeordnet. Er kann auch im oberen Bereich zwischen den beiden dortigen unteren Sitzen angeordnet sein.

Eine Sitzeinheit, bei der auch rückseitig hinter der Sitzeinheit 8 ein weiterer Schirm 12 zum Fremdlichtschutz und zur Abdunklung vorgesehen ist, ist in der Fig. 6 dargestellt. Der rückwärtige Schirm 12 ist vorzugsweise zusammenklappbar wie der Schirm der Fig. 4 und 5.

Die weiteren Figuren zeigen permanent aufgespannte, zum Einstieg verschwenkbare Schirme.

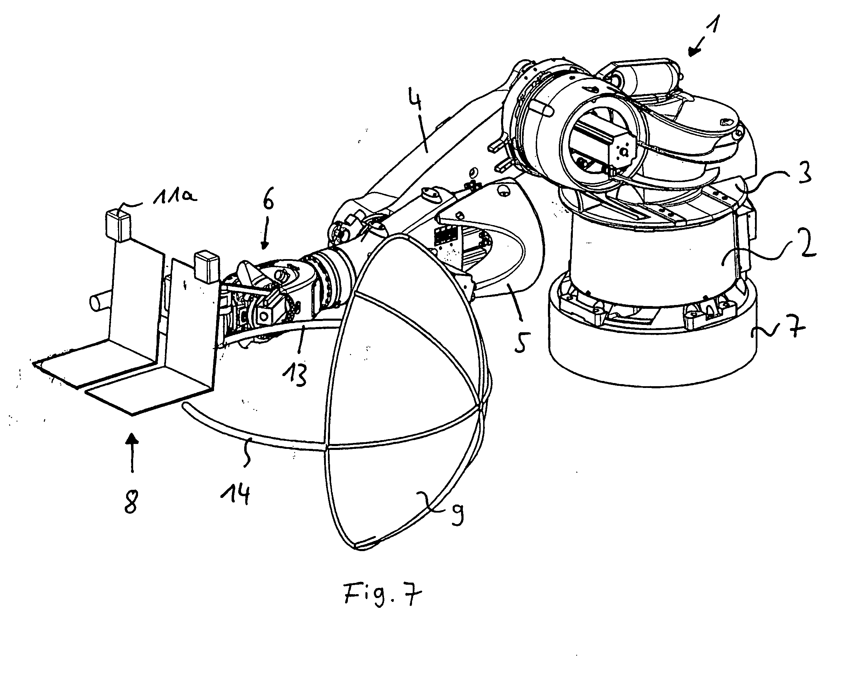

Zunächst ist in der Fig. 7 wieder ein erfindungsgemäßer Manipulator, insgesamt mit Sitzeinheit 8 und einem verschwenkbaren Schirm 9 in geöffneter Stellung, wobei der Schirm 9 seitlich fortgeschwenkt ist, dargestellt. So können Passagiere sich in der Sitzeinheit hinsetzen bzw. diese wieder verlassen.

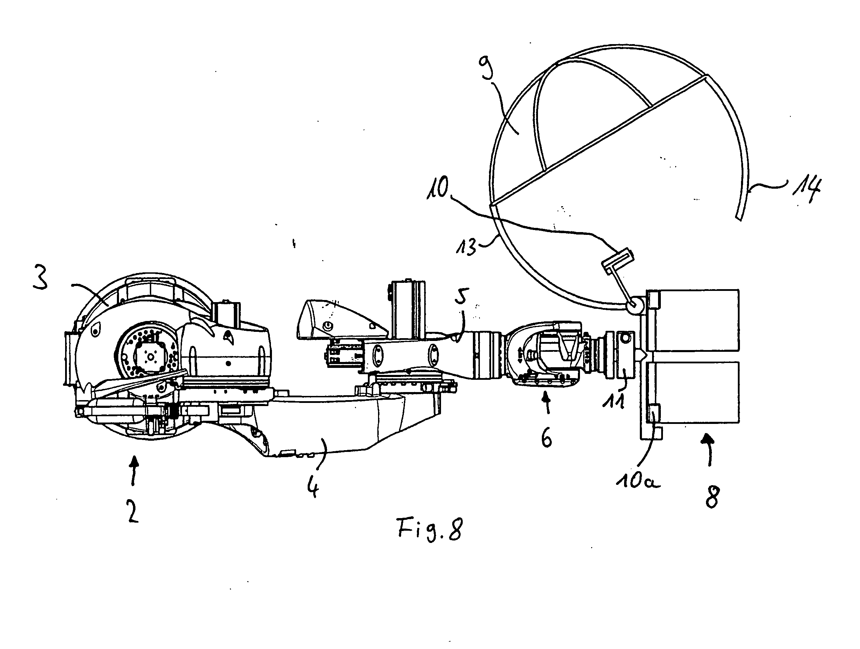

Die Fig. 8 zeigt den Manipulator der Fig. 7 in Draufsicht von oben.

Der Schirm 9 ist über einen Schwenkbügel 13 der Sitzeinheit angelenkt und kann über ein Gelenk manuell oder durch einen Motor verschwenkt werden. Auf der dem Schwenkbügel 13 abgewandten Seite des Schirms 9 ist ein Sicherungsbügel 14 vorgesehen, der in Schließstellung eine Sicherung dieser Stellung erlaubt. Der Projektor 10 ist um die gleiche Schwenkachse wie der Schirm 9 verschwenkbar. Er kann mit dem Schirm 9 oder unabhängig von diesem verschwenkbar sein, ist aber vorzugsweise von Schirm 9 schwingungstechnisch entkoppelt.

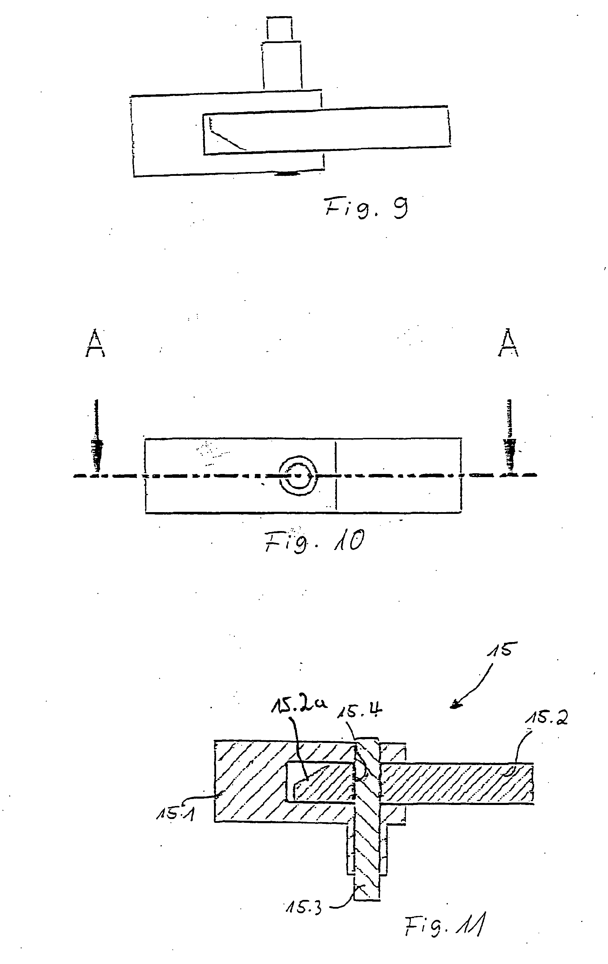

Hierzu ist eine von der Sitzeinheit und am freien Ende des Sicherungsbügels 14 eine Gegenlagerung mit einer Verriegelung 15 vorgesehen, wie sie in einer ersten Ausführungsform in den Fig. 9 bis 11 dargestellt und zwar in der Fig. 9 in einer Draufsicht, in der Fig. 10 in einer Seitenansicht und in Fig. 11 in einem Schnitt entsprechend A-A der Fig. 10.

Die Verriegelung 15 weist ein Aufnahmeteil 15.1 sowie ein Einsteckteil 15.2 mit einer schräg verlaufenden Auflauffläche 15.2a und einen Verriegelungsbolzen 15.3 auf. Im Einsteckteil 15.2 ist ein Durchbruch ausgebildet, durch den der Verriegelungsbolzen nach Einschub des Einsteckteils 15.2 in das Aufnahmeteil 15.1 hindurchgesteckt werden kann, um so die beiden Teile 15.1 und 15.2 zu verriegeln. Der Antrieb des Verriegelungsstiftes 15.3 kann beispielsweise elektromagnetisch erfolgen. Vorzugsweise sind das Aufnahmeteil 15.1 und der Verriegelungsstift 15.3 an der Sitzeinheit 8 angeordnet, während das Einsteckteil 15.2 das freie Ende des Sicherungsbügels 14 bildet.

Die Zuordnung der Teile 15.1 und 15.3 einerseits sowie des Teils 15.2 andererseits zu Sitzeinheit 8 und Verriegelungsbügel 14 kann aber auch umgekehrt gewählt werden.

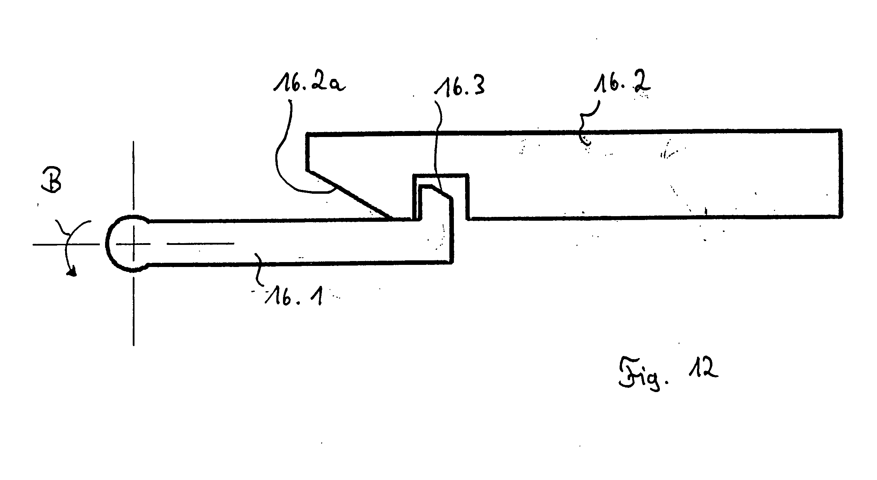

Ein anderer Verriegelungsmechanismus ist in der Fig. 12 dargestellt. Dieser weist einen unter einer elastischen Kraft in Richtung des Pfeils B, beispielsweise einer Feder, stehenden Schwenkhebel 16.1 und einen mit einer seitlichen Ausnehmung 16.3 versehenen Verriegelungshebel 16.2 mit einer schräg verlaufenden Auflauffläche 16.2a auf, letzterer wiederum am freien Ende des Verriegelungsbügels 14 ausgebildet sein kann, während der Riegel 16.2 wiederum am freien Ende des Verriegelungsbügels ausgebildet ist. Auch eine umgekehrte Anordnung kann gewählt werden.

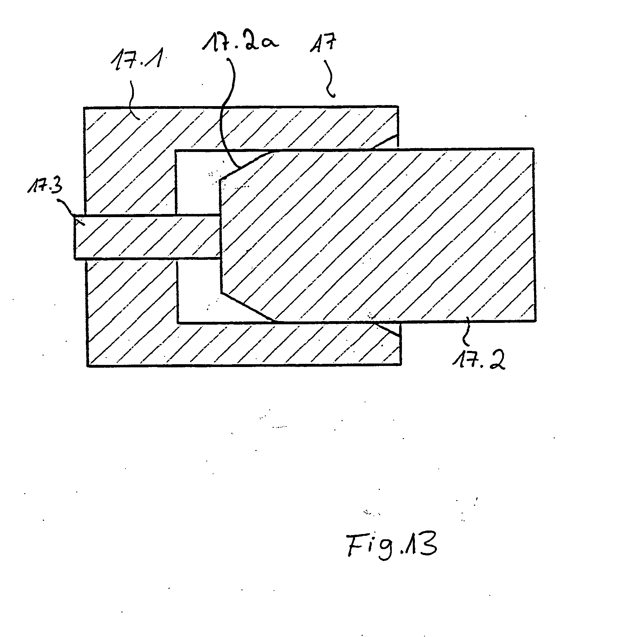

Die Fig. 13 zeigt einen weiteren Verriegelungsmechanismus 17 mit einem Aufnahmeteil 17.1 sowie einem Einsteckteil 17.2 mit einer schräg verlaufenden Auflauffläche 17.2a, das an seinem vorderen Ende einen Signalstift 17.3 aufweist. Hier erfolgt die Verriegelung durch bloße Führung des an seiner Vorderseite abgeschrägten Einsteckteils 17.2 im Aufnahmeteil 17.1 und einem angelenkten Ende des Schwenkbügels 13 angeordneten Krafterzeuger, beispielsweise einem Hydraulikzylinder oder dergleichen.

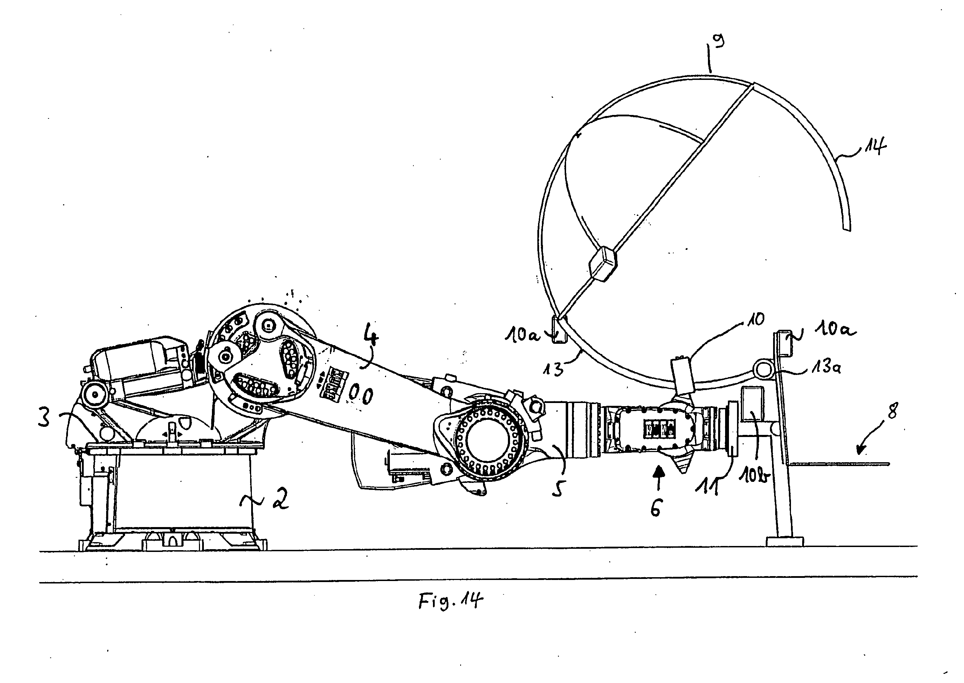

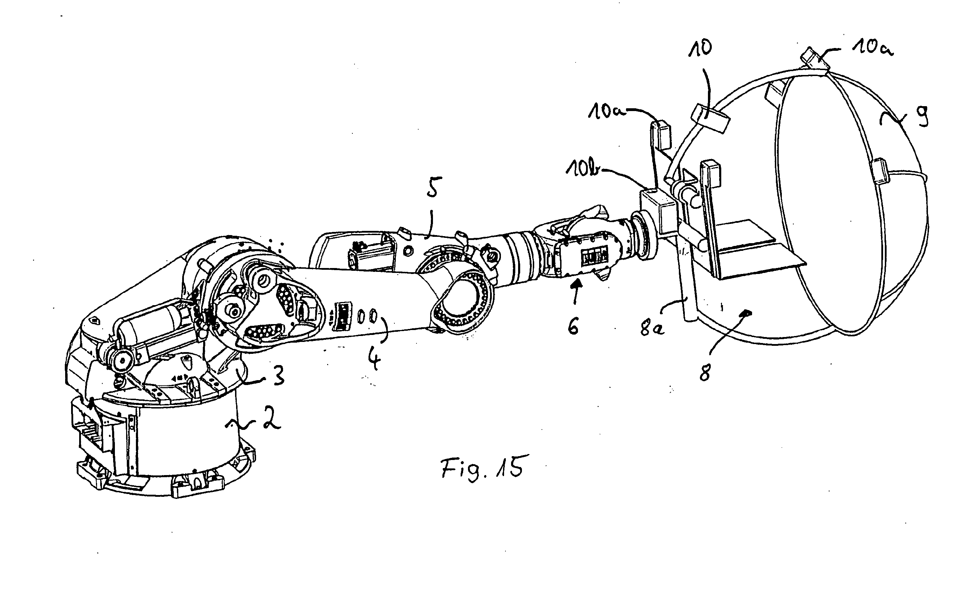

Die Fig. 14 und 15 zeigen eine weitere Ausführungsform des erfindungsgemäßen Simulators und zwar in Fig. 14 in Ein- und Ausstiegs-Position des Projektionsschirmes sowie in Fig. 15 in geschlossener Wiedergabe-Stellung des letzteren. Bei dieser Ausführungsform ist der Schwenkbügel 13 des Projektionsschirms 9 um eine zur Erstreckung der Lehnen der Sitze von der Sitzfläche der Sitzeinheit senkrecht gerichtete Schwenkachse 13a verschwenkbar, die auf der Rückseite der Lehnen der Sitzeinheit 8 angeordnet ist. Der Schwenkbügel 13 trägt einen Projektor 10. Auf der dem Schwenkbügel 13 abgewandten Seite des Projektionsschirms weist dieser wiederum einen Verriegelungshebel 14 auf, der entsprechend der unter Bezug auf die Fig. 11 bis 13 beschriebenen Weise an einem Abstellfuß 8a der Sitzeinheit 8 verriegelbar ist.

Derart ist der Projektionsschirm bei der Ausgestaltung der Fig. 14 und 15 in Erstreckungsrichtung der Rückenlehnen der Sitzeinheit 8 verschwenkbar (also in Aufnahmeposition in vertikaler Richtung). Ein Verstärker findet sich bei 10b. Auch am Schirm 9 sind Lautsprecher 10a angeordnet.

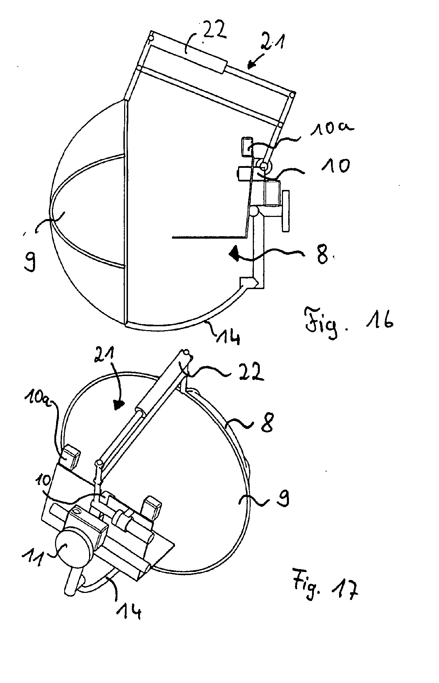

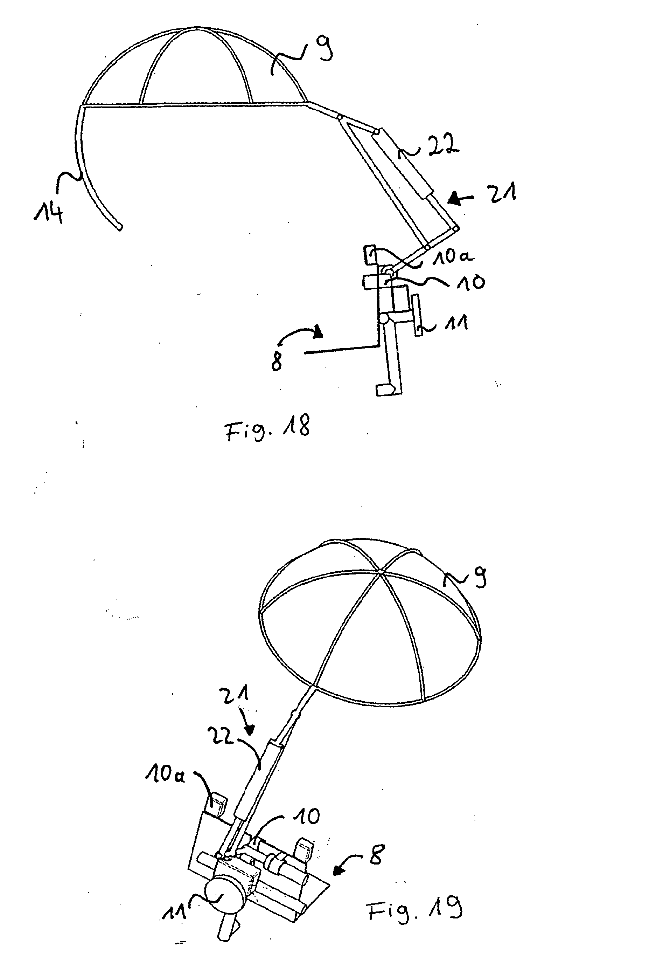

Während bei den bisherigen Ausführungsformen eines schwenkbaren Schirms dieser lediglich auf einem Kreisbogen um eine Schwenkachse verschwenkbar war, sieht die Ausgestaltung der Fig. 16 bis 18 einen Projektionsschirm vor, der über ein Hebelgetriebe 21 mit einer Kolben-Zylindereinheit zwischen geschlossener Betriebs-Position (Fig. 16 und 17) und geöffneter Ein- und Ausstiegsposition (Fig. 18 und 19) verschwenkbar ist. Auch hier kann die Verriegelung des Verriegelungsbügels 14 in der schon beschriebenen Weise erfolgen.

Die Verschwenkung kann auch hier, wie auch bei den vorher beschriebenen Schwenkausgestaltungen des Projektionsschirms in Erstreckungsrichtung der Rückenlehnen der Sitzeinheit 8 oder senkrecht hierzu oder aber unter jedem beliebigen Winkel erfolgen, wobei vorzugsweise ein Verrenken zur Seite, nach oben oder schräg nach oben, vorgesehen ist.

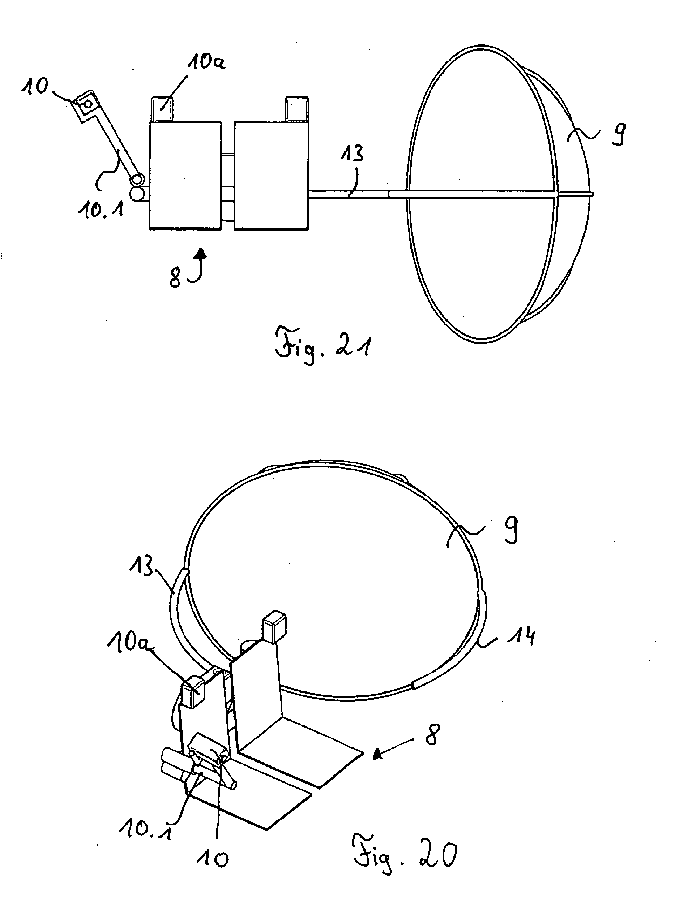

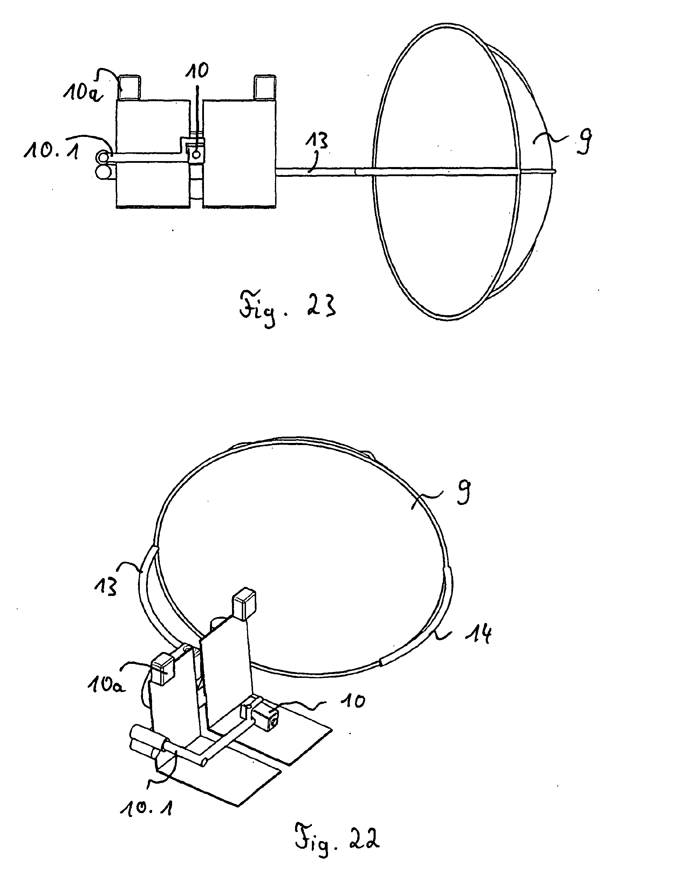

Die Figuren 20 bis 23 zeigen eine weitere erfindungsgemäße Sitzeinheit 8 mit Projektionsschirm 9 und Projektor 10. Der Projektionsschirm 9 ist dabei entsprechend der Ausgestaltung der Figuren 7 und 8 an der Sitzeinheit schwenkbar angelenkt (um eine Achse zur Sitzebene). Die Anordnung des Projektors 10 unterscheidet sich von der der Figuren 8 und 9. Der Projektor ist an einem winkelförmig ausgebildeten Schwenkhebel 10.1 befestigt, der seitlich einen der Sitze im Bereich der Rückenlehne schwenkbar angelenkt ist, so dass der Projektor 10, nach dem die Nutzer die Sitze vorzugsweise von vorne eingenommen haben, mit einem Bereich zwischen und vor den beiden Benutzern eingeschwenkt werden kann, wie dies in den Figuren 22 und 23 dargestellt ist. Damit kann der Projektor 10 genau auf der Symmetrieachse des Projektionsschirms 9 angeordnet sein, wodurch eine optimal, unverzerrte Bildwiedergabe erreicht wird.

Die Projektionseinheit eines Projektionsschirms kann ein Datenprojektor (Beamer) oder ein Laserprojektor sein. Es kann ein sphärisches Bild oder ein Stereobild erzeugt werden.

### Bezugszeichenliste

- 1: Simulator
- 1a: Manipulator
- 1b: Treppe
- 1c: Platform
- 2: Sockel
- 3: Karussell
- 4: Schwinge
- 5: Manipulatorarm
- 6: Hand
- 7: Basis
- 8: Sitzeinheit
- 9: Projektionsschirm
- 9a, 9b: Bügel
- 10: Projektor
- 10a: Lautsprecher
- 10b: Verstärker
- 11: Flanschteil
- 12: Schirm
- 13: Schwenkbügel
- 14: Sicherungsbügel
- 15: Verriegelung
- 15.1: Aufnahmeteil
- 15.2: Einsteckteil
- 15.3: Verriegelungsbolzen
- 16.1: Schwenkhebel
- 16.2: Verriegelungshebel
- 16.2a: Auflauffläche
- 16.3: seitliche Ausnehmung
- 17: Verriegelungsmechanismus
- 17.1: Aufnahmeteil
- 17.2: Einsteckteil
- 17.2a: Auflauffläche
- 17.3: Signalstift

- A1: vertikale Achse
- A2, A3: horizontale Achsen
- A4, A5, A6: Handachsen

## Patentansprüche

1. Simulator (1) mit einem Manipulator (1a) mit mehreren Drehachsen, einer an einem Handflansch des Manipulators befestigten Sitzeinheit (8), mit einem Bildwiedergabeschirm in Form eines Projektionsschirm (9) und mit einem Projektor (10) zur Projektion eines Bildes auf den Projektionsschirm (9) **dadurch gekennzeichnet, dass** der Projektionsschirm (9) zwischen einer Wiedergabe-Stellung vor der Sitzeinheit (8) und einer den Einstieg zur Sitzeinheit (8) freigebenden Ein- und Ausstiegsstellung bewegbar ist.

2. Simulator nach Anspruch 1, **dadurch gekennzeichnet, dass** der Projektionsschirm (9) eben ist.

3. Simulator nach Anspruch 1, **dadurch gekennzeichnet, dass** der Projektionsschirm (9) teilsphärisch ist.

4. Simulator nach Anspruch 2 oder 3, **dadurch gekennzeichnet, dass** der Projektionsschirm (9) faltbar ist.

5. Simulator nach Anspruch 4, **dadurch gekennzeichnet, dass** der Projektionsschirm (9) als zusammenklappbarer Schirm ausgebildet ist.

6. Simulator nach Anspruch 4, **dadurch gekennzeichnet, dass** der Projektionsschirm (9) lamellenartig faltbar ist.

7. Simulator nach einem der Ansprüche 4 bis 6, **dadurch gekennzeichnet, dass** der Projektionsschirm (9) aus faltbarem Stoffmaterial besteht.

8. Simulator nach Anspruch 1, **dadurch gekennzeichnet, dass** der Projektionsschirm (9) aus faserverstärktem Kunststoff besteht.

9. Simulator nach einem der Ansprüche 1 bis 8, **dadurch gekennzeichnet, dass** der Projektionsschirm (9) um eine oder mehrere Achsen verschwenkbar ist.

10. Simulator nach Anspruch 9, **dadurch gekennzeichnet, dass** der Projektionsschirm (9) von Hand verschwenkbar ist.

11. Simulator nach Anspruch 9, **dadurch gekennzeichnet, dass** der Projektionsschirm (9) automatisch verschwenkbar ist.

12. Simulator nach Anspruch 11 oder 12, **dadurch gekennzeichnet, dass** der Projektionsschirm (9) durch einen Pneumatik- oder Hydraulikzylinder verschwenkbar ist.

13. Simulator nach einem der Ansprüche 1 bis 14, **dadurch gekennzeichnet, dass** der Projektionsschirm (9) in seiner Wiedergabe-Stellung in einer Gegenlagerung gehalten ist.

14. Simulator nach einem der vorangehenden Ansprüche, **dadurch gekennzeichnet, dass** der Projektionsschirm (9) in der Wiedergabe-Stellung verriegelbar ist.

15. Simulator nach Anspruch 14 in Verbindung mit einem verschwenkbaren Projektionsschirm (9), **dadurch gekennzeichnet, dass** der Verriegelungsmechanismus ein Aufnahmeteil (15.1) und ein Einsteckteil (15.2) aufweist, die durch ein senkrecht durch beide hindurchführbaren Verriegelungsbolzen (15.3) fest miteinander verbindbar sind.

16. Simulator nach Anspruch 14, **gekennzeichnet durch** einen Verriegelungsmechanismus mit einer Auflauffläche (16.2a) und einer Ausnehmung versehenen Verriegelungsstab (16.2) und mit einem hakenförmigen Schwenkhebel (16.1), der zum Verriegelungsstab (16.2) hin federbeaufschlagt vorgespannt ist.

17. Simulator nach Anspruch 16, **dadurch gekennzeichnet, dass** der Verriegelungsmechanismus ein Aufnahmeteil (17.1) und einen mit einem Signalstift (17.3) versehenen Verriegelungsstift (17.2) aufweist, wobei die Verriegelung durch einen Anpressdruck erzeugt wird.

18. Simulator nach einem der Ansprüche 1 bis 17, **dadurch gekennzeichnet, dass** der Projektor (10) schwingungstechnisch entkoppelt von Projektionsschirm (9) angeordnet ist.

19. Simulator nach einem der Ansprüche 1 bis 18, **dadurch gekennzeichnet, dass** der Projektor (10) an der Außenseite der Sitzeinheit (8) um eine Symmetrieachse des Projektionsschirm (9) in Wiedergabestellung paralleler Achse in eine Position verschwenkbar ist, bei der die optische Achse des Projektors (10) im wesentlichen mit der Symmetrieachse des Projektors (9) übereinstimmt.

20. Simulator nach einem der Ansprüche 1 bis 19, **dadurch gekennzeichnet durch** ein der Sitzeinheit (8) zugeordnetes Tonwiedergabesystem.

## Claims

1. A simulator (1) with a manipulator (1 a) with a plurality of pivots, a seating unit (8) secured to a hand flange of the manipulator, with an image display panel (9) and with a projector (10) for projecting an image onto to the projection screen (19), **characterised in that** the projection screen (9) is movable between a display position in front of the seating unit (8) and an entrance and exit position providing access to the seating unit (8).

2. The simulator according to Claim 1, **characterised in that** the projection screen (9) is flat.

3. The simulator according to Claim 1, **characterised in that** the projection screen (9) is partially spherical.

4. The simulator according to Claim 2 or 3, **characterised in that** the projection screen (9) is foldable.

5. The simulator according to Claim 4, **characterised in that** the projection screen (9) is designed as a collapsible screen.

6. The simulator according to Claim 4, **characterised in that** the projection screen (9) is foldable in a lamella-like manner.

7. The simulator according to any one of Claims 4 to 6, **characterised in that** the projection screen (9) consists of foldable fabric material.

8. The simulator according to Claim 1, **characterised in that** the project screen (9) consists of fibre-reinforced plastic.

9. The simulator according to any one of Claims 1 to 8, **characterised in that** the projection screen (9) is pivotable about one or a plurality of axes.

10. The simulator according to Claim 9, **characterised in that** the projection screen (9) is pivotable by hand.

11. The simulator according to Claim 9, **characterised in that** the projection screen (9) is automatically pivotable.

12. The simulator according to Claim 11 or 12, **characterised in that** the projection screen (9) is pivotable by means of a pneumatic or hydraulic cylinder.

13. The simulator according to any one of Claims 1 to 2, **characterised in that** the projection screen (9) is retained in its display position in a counter-bearing.

14. The simulator according to any one of the preceding claims, **characterised in that** the projection screen (9) is lockable in the display position.

15. The simulator according to Claim 14 in combination with a pivotable projection screen (9), **characterised in that** the interlocking mechanism has a receiving section (15.1) and a plug-in section (15.2), which are permanently connectable to each other by means both insertable locking bolts (15.3).

16. The simulator according to Claim 14, **characterised by** an interlocking mechanism with a contact surface (16.2a) and a locking bar (16.2) provided with a recess, and with a hook-shaped swivel lever (16.1), which is pre-clamped in a spring-loaded manner as far as the locking bar (16.2).

17. The simulator according to Claim 16, **characterised in that** the interlocking mechanism has a receiving section (17.1) and a locking pin (17.2) provided with a signal pin (17.3), wherein the interlocking is produced by a contact pressure.

18. The simulator according to any one of Claims 1 to 17, **characterised in that** the projector (10) is arranged so that it is vibration-decoupled from the projection screen (9).

19. The simulator according to any one of Claims 1 to 18, **characterised in that** the projector (10) is pivotable on the outside of the sealing unit (8) about an axis parallel with a symmetrical axis of the projection screen (9) in the display position into a position in which the optical axis of the projector (10) corresponds essentially to the axis of symmetry of the projector (9).

20. The simulator according to any one of Claims 1 to 19, **characterised by** a sound reproduction system assigned to the seating unit (8).

## Revendications

1. Simulateur (1) avec un manipulateur (1a) doté de plusieurs axes de rotation, une unité de siège (8) fixée à une bride manuelle du manipulateur, avec un écran de retransmission d'image prenant la forme d'un écran de projection (9) et avec un projecteur (10) pour projeter une image sur l'écran de projection (9), **caractérisé en ce que** l'écran de projection (9) peut être déplacé entre une position de retransmission devant l'unité de siège (8) et une position de montée et descente permettant d'accéder à l'unité de siège (8).

2. Simulateur selon la revendication 1, **caractérisé en ce que** l'écran de projection (9) est plat.

3. Simulateur selon la revendication 1, **caractérisé en ce que** l'écran de projection (9) est en partie sphérique.

4. Simulateur selon la revendication 2 ou 3, **caractérisé en ce que** l'écran de projection (9) est pliable.

5. Simulateur selon la revendication 4, **caractérisé en ce que** l'écran de projection (9) est réalisé sous la forme d'un écran rabattable.

6. Simulateur selon la revendication 4, **caractérisé en ce que** l'écran de projection (9) peut être plié à la façon de lamelles.

7. Simulateur selon l'une quelconque des revendications 4 à 6, **caractérisé en ce que** l'écran de projection (9) est réalisé à partir d'un matériau pliable.

8. Simulateur selon la revendication 1, **caractérisé en ce que** l'écran de projection (9) se compose d'une matière synthétique renforcée en fibres.

9. Simulateur selon l'une quelconque des revendications 1 à 8, **caractérisé en ce que** l'écran de projection (9) peut pivoter autour d'un ou de plusieurs axes.

10. Simulateur selon la revendication 9, **caractérisé en ce que** l'écran de projection (9) peut être pivoté à la main.

11. Simulateur selon la revendication 9, **caractérisé en ce que** l'écran de projection (9) peut être pivoté automatiquement.

12. Simulateur selon la revendication 11 ou 12, **caractérisé en ce que** l'écran de projection (9) peut être pivoté par le biais d'un vérin pneumatique ou hydraulique.

13. Simulateur selon l'une quelconque des revendications 1 à 12, **caractérisé en ce que** l'écran de projection (9) est maintenu dans un contre-support dans sa position de retransmission.

14. Simulateur selon l'une quelconque des revendications précédentes, **caractérisé en ce que** l'écran de projection (9) peut être verrouillé dans la position de retransmission.

15. Simulateur selon la revendication 14 conjointement avec un écran de projection (9) pivotable, **caractérisé en ce que** le mécanisme de verrouillage comporte une partie de logement (15.1) et une partie d'enfichage (15.2) pouvant être reliées fixement entre elles à la perpendiculaire par deux boulons de verrouillage (15.3) pouvant être introduits de façon traversante.

16. Simulateur selon la revendication 14, **caractérisé par** un mécanisme de verrouillage doté d'une surface de roulement (16.2a) et d'une tige de verrouillage (16.2) pourvue d'un évidement et avec un levier de pivotement (16.1) en forme de crochet précontraint à la façon d'un ressort en direction de la tige de verrouillage (16.2).

17. Simulateur selon la revendication 16, **caractérisé en ce que** le mécanisme de verrouillage comporte une partie de logement (17.1) et une tige de verrouillage (17.2) pourvue d'une tige de signalisation (17.3), le verrouillage se produisant par le biais d'une pression comprimante.

18. Simulateur selon l'une quelconque des revendications 1 à 17, **caractérisé en ce que** le projecteur (10) est disposé de façon découplée, selon la technique par oscillation, de l'écran de projection (9).

19. Simulateur selon l'une quelconque des revendications 1 à 18, **caractérisé en ce que** le projecteur (10) peut être pivoté, au niveau du côté extérieur de l'unité de siège (8), autour d'un axe de symétrie de l'écran de projection (9) dans une position de retransmission parallèle à l'axe dans laquelle l'axe optique du projecteur (10) coïncide pour l'essentiel avec l'axe de symétrie du projecteur (9).

20. Simulateur selon l'une quelconque des revendications 1 à 19, **caractérisé par** un système de retransmission du son associé à l'unité de siège (8).
